# EUROPEAN PATENT APPLICATION

(11) **EP 2 965 878 A1**
(43) Date of publication of application: **13.01.2016**
(21) Application number: 15174758.1
(22) Date of filing: 01.07.2015
(51) Int. Cl.: B25J 19/00, B23K 9/133

(54) **ROBOT AND ROBOTIC SYSTEM**

(30) Priority: 10.07.2014 JP 2014142549
(71) Applicant: Kabushiki Kaisha Yaskawa Denki, Kitakyushu-shi, Fukuoka 806-0004 (JP)
(72) Inventor: IZAWA, Tamon, Kitakyushu-shi, Fukuoka 806-0004 (JP); SAITO, Hiroshi, Kitakyushu-shi, Fukuoka 806-0004 (JP); ICHIBANGASE, Atsushi, Kitakyushu-shi, Fukuoka 806-0004 (JP)
(74) Representative: Viering, Jentschura & Partner mbB Patent- und Rechtsanwälte

(57) **Abstract**

A robot (10) includes: a mounting portion (15) on which a welding torch (20) is mountable; an arm portion (14b) having a tip portion, the arm portion (14b) swingably supporting the mounting portion (15) at the tip portion; an arm supporting portion (14a) having a tip portion, the arm supporting portion (14a) supporting the arm portion (14b) rotatably around a first rotation axis (R) at the tip portion, the first rotation axis (R) being perpendicular to a swinging axis (B) of the mounting portion (15); and a feeding device (30) arranged in a space (H) to intersect with an axis line of the first rotation axis (R), the space (H) being formed between the tip portion and a base end portion of the arm portion (14b) along an axis line of the first rotation axis (R), the feeding device (30) being configured to feed a wire (Wi) to the welding torch (20) mounted on the mounting portion (15).

## Description

### BACKGROUND

### 1. Technical Field

Embodiments of the disclosure relate to a robot and a robotic system.

### 2. Description of the Related Art

Conventionally, a robot used for arc welding is known. This robot has a multiaxial arm. A tip movable part of this multiaxial arm is provided with a welding torch (hereinafter referred to as "torch") as an end effector.

Here, a welding wire is fed to the torch. This feeding is performed by a wire feeding device (hereinafter referred to as "feeding device") (for example, see JP-A-2006-051581). The feeding device feeds a wire while the wire is sandwiched by a plurality of rotating rollers.

A feeding device main body that includes the plurality of rotating rollers described above is, for example, attached to the outside of the above-described arm that supports the tip movable part. Accordingly, the wire is fed through the outside of the arm.

However, the above-described related art still has room for improvement regarding effective reduction in the interference between the wire and a peripheral object and reduction in size of the space at the periphery of the robot.

For example, in the above-described robot, the feeding device main body is disposed outside of the arm. Furthermore, the wire passes through the outside of the arm. Accordingly, there arise problems that the wire is likely to interfere with the peripheral object, and that it is necessary to have a wide space at the periphery of the robot so as to reduce this interference.

One aspect of the embodiment has been made in view of the above-described circumstances. An object according to one aspect of the embodiment is to provide a robot and a robotic system that can have a compact outer shape to more effectively reduce the interference between: the robot and its members; and peripheral objects, and can decrease the size of a space at the periphery of the robot.

### SUMMARY

A robot according to an embodiment includes a mounting portion, an arm portion, an arm supporting portion, and a feeding device. The mounting portion is provided such that a welding torch is mountable thereto. The arm portion swingably supports the mounting portion at a tip portion of the arm portion. The arm supporting portion supports, at its tip portion, the arm portion rotatably around a first rotation axis, which is perpendicular to a swinging axis of the mounting portion. The feeding device is arranged in a space formed between the tip portion and a base end portion of the arm portion along an axis line of the first rotation axis, so as to intersect with an axis line of the first rotation axis, and the feeding device is configured to feed a wire to the welding torch mounted on the mounting portion. The feeding device includes a feeding mechanism and a motor. The feeding mechanism is configured to feed the wire along the axis line of the first rotation axis. The motor is arranged between an inner wall of the arm portion facing the space and the feeding mechanism, so as to drive the feeding mechanism.

According to the embodiment, by making the outer shape compact, the interference between: the robot and its members; and peripheral objects can be more effectively prevented, and a space provided at the periphery of the robot can be reduced in size.

### BRIEF DESCRIPTION OF THE DRAWINGS

Fig. 1A is a schematic side diagram illustrating a robot according to an embodiment;
Fig. 1B is a schematic diagram illustrating movements around respective axes of the robot and the position of a feeding device;
Fig. 2 is a schematic diagram illustrating the overall configuration of a robotic system;
Fig. 3A is a schematic perspective diagram illustrating the periphery of an upper arm;
Fig. 3B is a schematic perspective diagram illustrating the configuration of the feeding device;
Fig. 3C is a schematic side diagram illustrating the configuration of the feeding device;
Fig. 3D is a schematic plan diagram illustrating the periphery of the upper arm;
Fig. 3E is a schematic bottom diagram illustrating the periphery of the upper arm;
Fig. 3F is a schematic front diagram illustrating the periphery of the upper arm;
Fig. 3G is a schematic perspective diagram illustrating the periphery of a torch clamp; and
Fig. 4 is a schematic perspective diagram illustrating the periphery of an upper arm according to a modification.

### DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

An embodiment of a robot and a robotic system disclosed in this application will be described in detail with reference to the accompanying drawings. The following embodiment, however, does not limit the technique of this disclosure.

In the following, a robot used for arc welding will be described as an example. A welding torch will be merely described as a "torch."

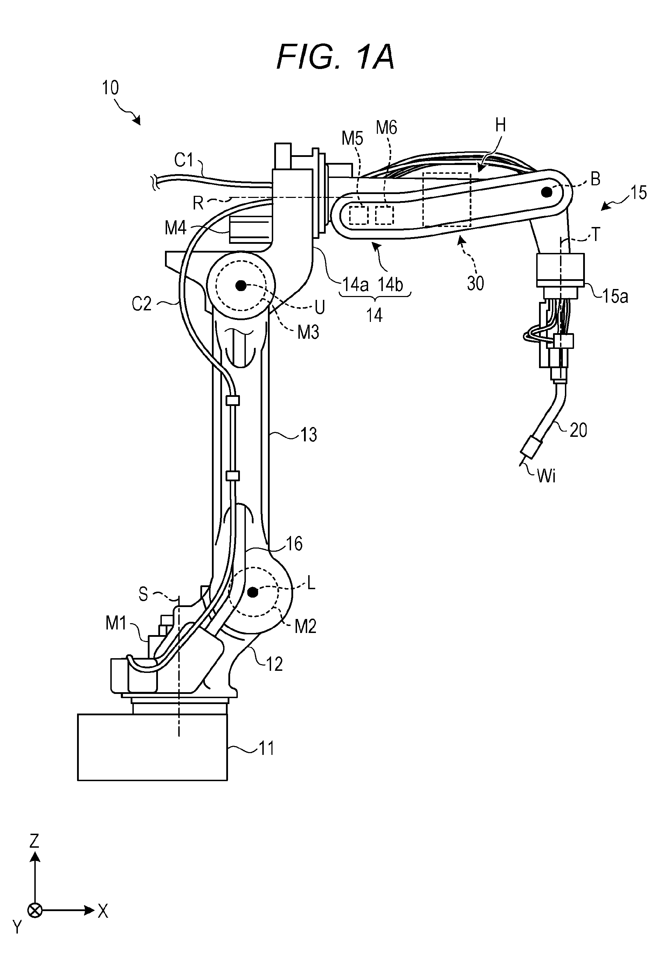

Firstly, the outline of a robot 10 according to the embodiment will be described. Fig. 1A is a schematic side diagram of the robot 10 according to the embodiment. Hereinafter, for convenience of explanation, assuming that the turning position and the posture of the robot 10 are basically in the state illustrated in Fig. 1A, a description will be given of the positional relationship of the respective parts in the robot 10. This state illustrated in Fig. 1A may be referred to as a "basic posture" of the robot 10.

In the robot 10, the side closer to an installation surface on which a base portion 11 is installed is referred to as a "base end side" and the periphery of the base end side of each member is referred to as a "base end portion." The side of the robot 10, which is closer to a flange 15a, is referred to as a "tip side" and the periphery of the tip side of each member is referred to as a "tip portion."

For facilitating the description, a three-dimensional coordinate system including the Z-axis whose positive direction is a vertical upward direction is illustrated in Fig. 1A. This coordinate system may be also illustrated in the other drawings used in the following description. Here, in this embodiment, the positive direction of the X-axis indicates the forward side of the robot 10.

As illustrated in Fig. 1A, the robot 10 is a so-called serial-link perpendicular articulated robot. The robot 10 has six rotational joint axes of an axis S, an axis L, an axis U, an axis R, an axis B, and an axis T. The robot 10 also has six servo motors M1, M2, M3, M4, M5, and M6. The robot 10 includes the base portion 11, a turning base 12, a lower arm 13, an upper arm 14, a mounting portion 15, and a feeding device 30.

The upper arm 14 includes a first arm 14a and a second arm 14b. The first arm 14a is an example of an arm supporting portion, and the second arm 14b is an example of an arm portion.

A conduit cable C1 and a welding power supply cable C2 are coupled to the outside of the base end portion of the upper arm 14. Here, the welding power supply cable C2 is routed along the lower arm 13. A servo motor cable C3 (not illustrated) is routed inside a pipe portion 16 to be coupled to the respective servo motors M1 to M6. A gas hose C4 (not illustrated) is, for example, routed along the lower arm 13 to be guided toward the upper arm 14.

The conduit cable C1 corresponds to a wire cable 41 described later. The welding power supply cable C2 branches outside the base end portion of the upper arm 14 to be routed as a power cable 43 described later. The gas hose C4 corresponds to a gas hose 42 described later.

The base portion 11 is a supporting base secured to the floor surface or the like. The base portion 11 supports the turning base 12 rotatably around the axis S. By driving of the servo motor M1, the base portion 11 and the turning base 12 are relatively rotated around the axis S. The turning base 12 supports the base end portion of the lower arm 13 rotatably around the axis L perpendicular to the axis S. By driving of the servo motor M2, the turning base 12 and the lower arm 13 are relatively rotated around the axis L.

The lower arm 13 supports, at its tip portion, the base end portion of the first arm 14a of the upper arm 14 rotatably around the axis U parallel to the axis L. By driving of the servo motor M3, the lower arm 13 and the first arm 14a are relatively rotated around the axis U. The first arm 14a supports, at its tip portion, the base end portion of the second arm 14b rotatably around the axis R perpendicular to the axis U. By driving of the servo motor M4, the first arm 14a and the second arm 14b are relatively rotated around the axis R. Here, the axis R is an example of a first rotation axis.

The second arm 14b supports, at its tip portion, the base end portion of the mounting portion 15 rotatably around the axis B perpendicular to the axis R. By driving of the servo motor M5, the second arm 14b and the mounting portion 15 are relatively rotated around the axis B. Here, the axis B is an example of a swinging axis.

A torch 20 is mounted on the mounting portion 15. Here, the mounting portion 15 has the flange 15a that is rotatable around the axis T perpendicular to the axis B. The axis T is an example of a second rotation axis. The torch 20 is mounted on the mounting portion 15 via the flange 15a. By driving of the servo motor M6, the flange 15a is rotated around the axis T.

The terms such as "perpendicular" and "parallel" used in this description are not defined in a mathematically strict sense, and are allowed to include substantial tolerances and/or errors. The term "perpendicular" in this embodiment does not only mean the state where two straight lines (rotation axes) are perpendicular to each other in the identical plane, but also includes the state where two straight lines (rotation axes) are skew, that is, two skew straight lines (rotation axes) are perpendicular to each other in the plane to which these are projected.

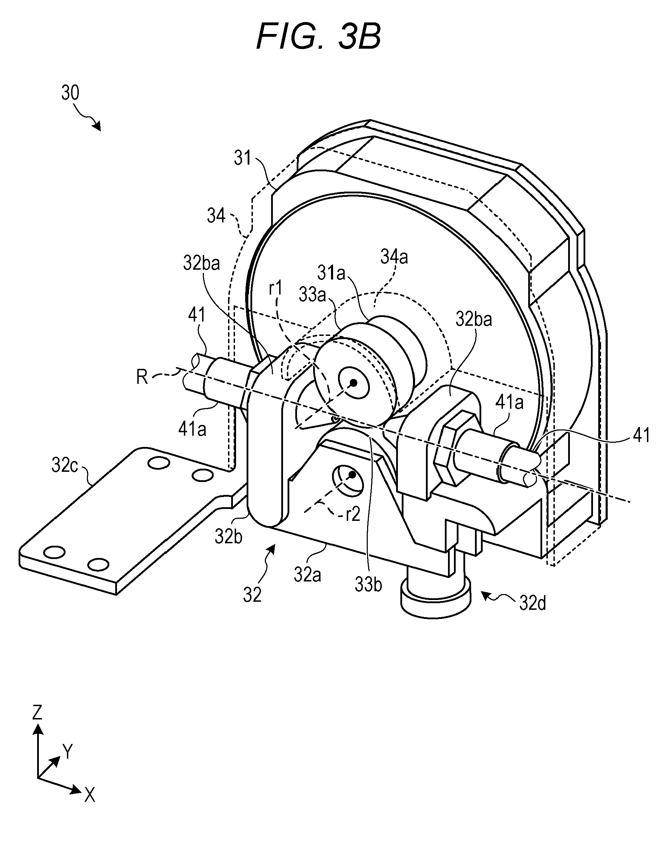

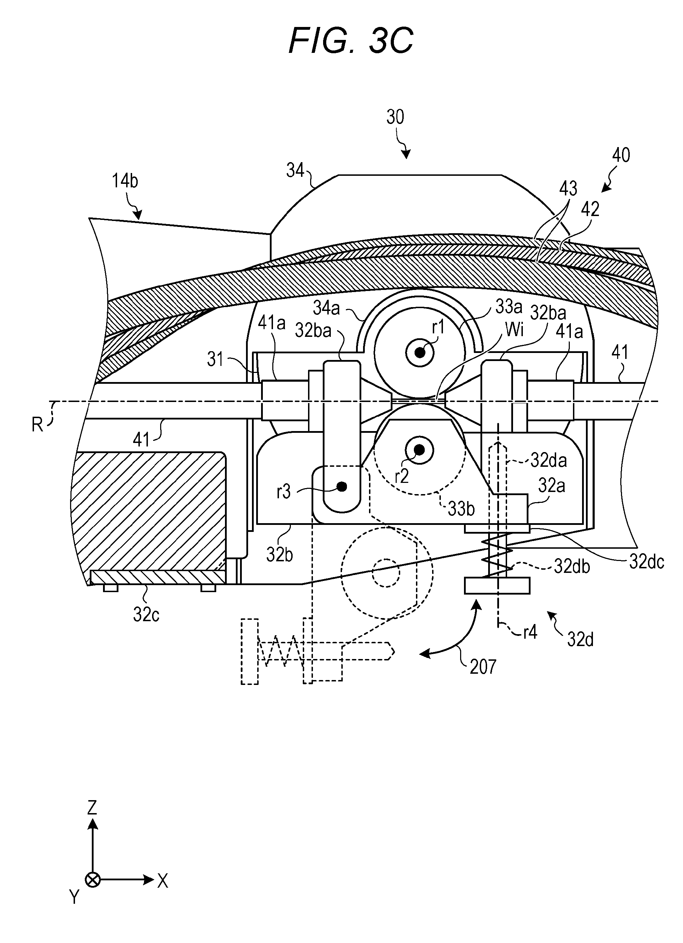

The tip portion side of the second arm 14b has a forked shape (U shape) opened as viewed from the top surface direction (the positive direction in the Z-axis). A space H opened in the Z-axis direction is formed between this fork along the axis line of the axis R. This space H is formed between the base end portion and the tip portion of the second arm 14b. The feeding device 30 is arranged in the space H to intersect with the axis line of the axis R. The feeding device 30 supplies a wire Wi to the torch 20. The detail of the feeding device 30 will be described later with reference to Figs. 3B and 3C.

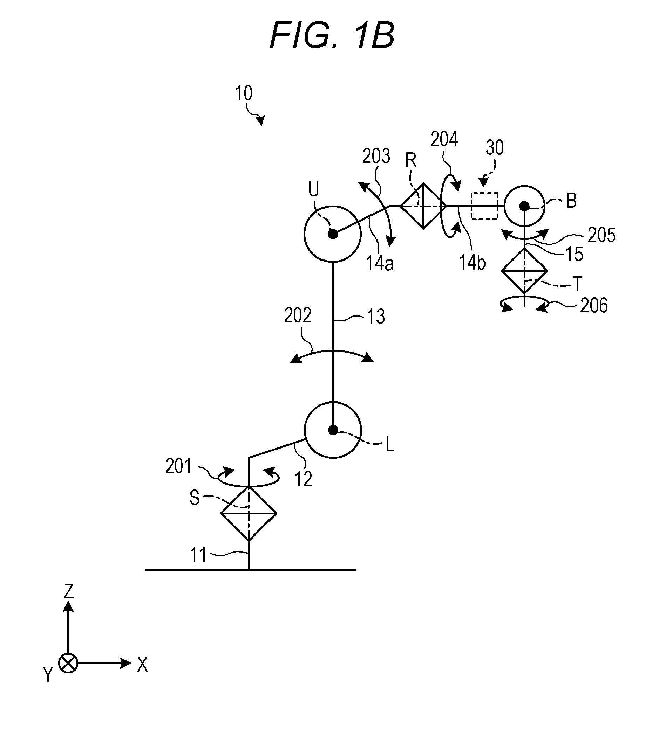

For facilitating the description so far, Fig. 1B schematically illustrates the movements around the respective axes of the robot 10 and the position of the feeding device 30. Fig. 1B is a schematic diagram illustrating the movements around the respective axes of the robot 10 and the position of the feeding device 30. In Fig. 1B, the robot 10 as viewed from the right side surface direction (the negative direction of the Y-axis) is fairly schematically illustrated using graphic symbols indicating joints.

As illustrated in Fig. 1B, the turning base 12 is supported by the base portion 11 and turns around the axis S (see an arrow 201 in the drawing). The lower arm 13 is supported by the turning base 12, and swings in the front-back direction around the axis L (see an arrow 202 in the drawing).

The first arm 14a is supported by the lower arm 13 and swings in the up-down direction around the axis U (see an arrow 203 in the drawing). The second arm 14b is supported by the first arm 14a and rotates around the axis R (see an arrow 204 in the drawing).

The feeding device 30 is arranged to intersect with the axis line of the axis R between the base end portion and the tip portion of the second arm 14b.

Here, the mounting portion 15 is supported by the second arm 14b and swings around the axis B (see an arrow 205 in the drawing). The tip portion (the flange 15a described above) of the mounting portion 15 rotates around the axis T (see an arrow 206 in the drawing).

As just described, in the robot 10 according to the embodiment, the feeding device 30 is arranged in the above-described space H formed between the tip portion and the base end portion of the second arm 14b so as to intersect with the axis line of the axis R. The feeding device 30 thus arranged is configured to feed the wire Wi along the axis line of the axis R. This allows the wire Wi to pass through the inner wall side of the second arm 14b facing the space H. As a result, the outer shape of the second arm 14b can be compact.

Thus, the interference between: the robot 10 and the feeding device 30; and the peripheral object can be prevented more effectively, and a space provided at the periphery of the robot 10 can be reduced in size. This also allows maintaining the beauty of the appearance of the robot 10.

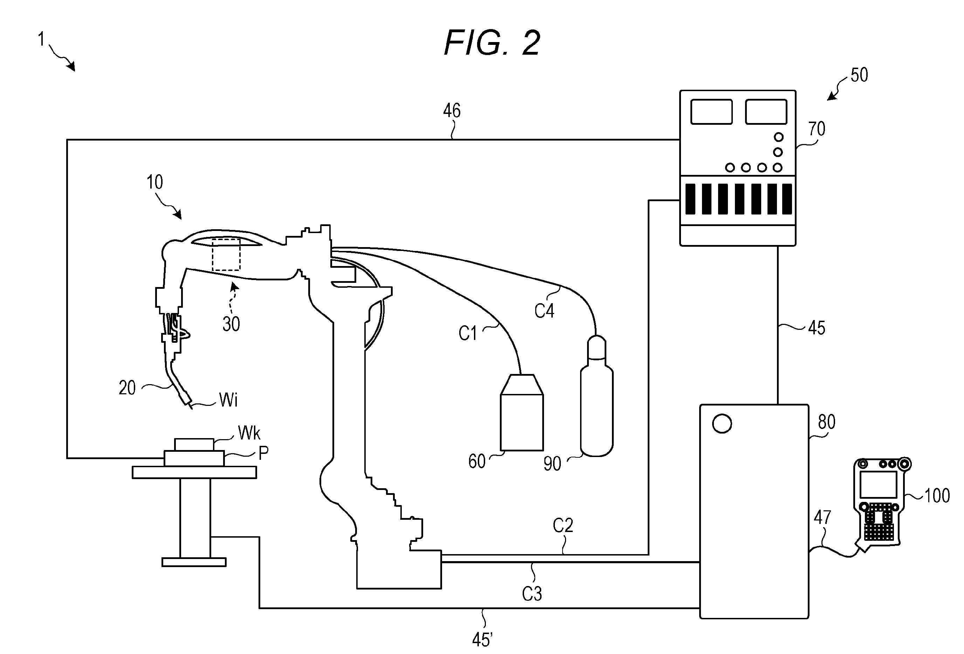

Next, the overall configuration of a robotic system 1 according to the embodiment will be described with reference to Fig. 2. Fig. 2 is a schematic diagram illustrating the overall configuration of the robotic system 1. In Fig. 2, the respective parts are simplistically illustrated.

As illustrated in Fig. 2, the robotic system 1 includes the robot 10 and an arc welding device 50. The arc welding device 50 includes a wire storage 60, a welding power supply 70, a controller 80, a gas cylinder 90, and a positioner P.

The wire storage 60 is a device as a supply source of the wire Wi, and includes a wire reel and the like, for example. The wire storage 60 and the robot 10 are coupled together via the conduit cable C1. The wire Wi is fed to the torch 20 by the feeding device 30 arranged in the robot 10.

The welding power supply 70 is a power supply device for arc welding, and is coupled to the robot 10 via the welding power supply cable C2. The welding power supply 70 is coupled to the positioner P (a workpiece Wk) via a cable 46. The welding power supply 70 supplies welding power for arc welding to a portion between the torch 20 and the positioner P (the workpiece Wk). Furthermore, the welding power supply 70 supplies the feeding device 30 with driving power for feeding the wire Wi via a cable (not illustrated), and controls a motor 31 described later.

The controller 80 is coupled to various devices including the robot 10, the welding power supply 70, and the positioner P by the servo motor cable C3, a cable 45, and a cable 45' so as to convey information. The controller 80 controls the operations of these various devices. Specifically, the controller 80 controls the position and the posture of the robot 10. Accordingly, the controller 80 changes the position and the posture of the torch 20. Furthermore, the controller 80 controls the feeding speed of the wire Wi and the voltage between the wire Wi and the workpiece Wk via the welding power supply 70.

The controller 80 is couplable to an operation device 100 via a cable 47 or a communication network of a wired local area network (LAN) or a wireless LAN (not illustrated). The operation device 100 is, for example, used when an operator programs the operation of arc welding and when the operator monitors the state of arc welding.

The gas cylinder 90 is a gas supply source for shielding gas. The gas cylinder 90 is coupled to the robot 10 via the gas hose C4, and supplies the shielding gas to the torch 20. This shielding gas is discharged from the tip of the torch 20, and shields the arc generated from the tip of the wire Wi from the atmosphere.

As described above, the positioner P is coupled to the welding power supply 70 via the cable 46 and receives supply of welding power. Furthermore, the positioner P includes an actuator (not illustrated) controlled by the controller 80 via the cable 45'. The controller 80 changes the position and the posture of the workpiece Wk using the actuator so that the robot 10 easily welds the workpiece Wk.

Accordingly, in the robotic system 1 according to the embodiment, the controller 80 uses the robot 10 to change the position and the posture of the torch 20. Furthermore, the controller 80 causes the feeding device 30 to feed the wire Wi to the torch 20. The controller 80 causes the welding power supply 70 to supply welding power to the torch 20. The controller 80 generates an arc from the tip of the wire Wi, and simultaneously performs arc welding on the workpiece Wk along a predetermined welding schedule line.

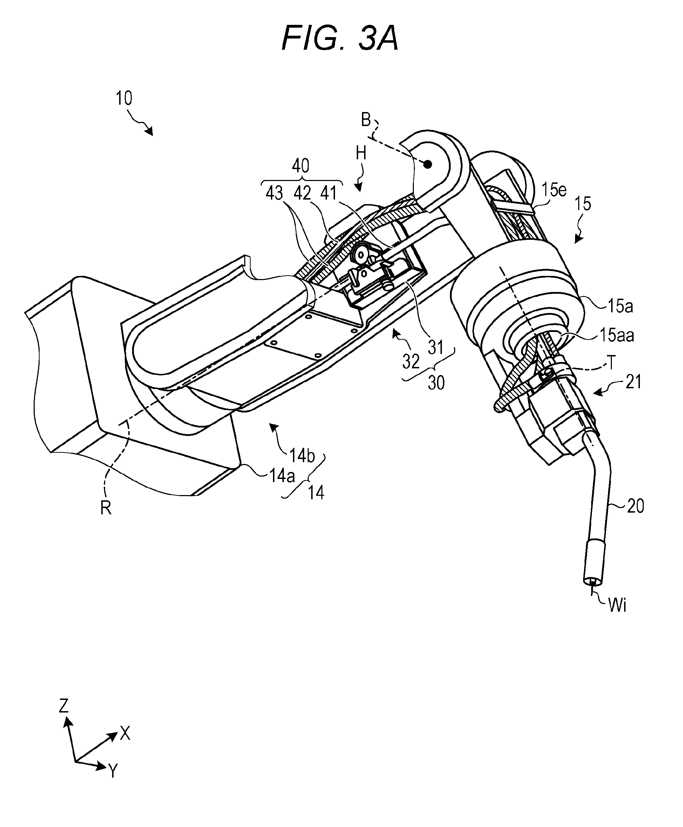

Next, the arrangement structure of the feeding device 30 will be specifically described with reference to Fig. 3A. Fig. 3A is a schematic perspective diagram illustrating the periphery of the upper arm 14. In Fig. 3A, to clearly illustrate the structure at the inner wall side of the second arm 14b facing the above-described space H, a part of the second arm 14b is omitted.

As already described and as illustrated in Fig. 3A, the second arm 14b has the space H, which is opened in the Z-axis direction illustrated in this drawing, between the base end portion and the tip portion of the second arm 14b. The feeding device 30 is arranged in this space H to intersect with the axis line of the axis R.

As illustrated in Fig. 3A, the feeding device 30 includes the motor 31 and a feeder 32. The motor 31 is a driving source of the feeder 32. The motor 31 is arranged on the inner wall of the second arm 14b such that a shaft 31a (described later) as the output shaft of the motor 31 has a skew positional relationship with the axis line of the axis R. That is, the motor 31 is arranged such that the tip of the shaft 31a is oriented to the negative direction of the Y-axis illustrated in Fig. 3A.

A space occupied by the feeding device 30 itself within the space H inside the second arm 14b can be kept small in size by arranging the motor 31 as just described. Accordingly, the second arm 14b can be compact, and the interference between: the robot 10 and the feeding device 30; and the peripheral object can be effectively reduced.

The motor 31 is provided to fit into a space between the inner wall of the second arm 14b and the axis line of the axis R as viewed from the positive direction of the Z-axis illustrated in Fig. 3A. Thus, the beauty of the appearance of the second arm 14b can be maintained, and the interference between: the robot 10 and the feeding device 30; and the peripheral object can be reduced more effectively.

As the motor 31, a so-called "flat motor" that has an aspect ratio (axial dimension/radial dimension) less than 1 for a housing. The aspect ratio is further preferably 0.1 or more and 0.4 or less.

This allows shortening the dimensions of the feeding device 30 and the second arm 14b in the Y-axis direction illustrated in Fig. 3A. Accordingly, the second arm 14b can be more compact. The detail of the feeding device 30 will be described later with reference to Figs. 3B and 3C.

The feeder 32 is coupled to the wire cable 41 as a feeding path of the wire Wi. This wire cable 41 is routed along the axis line of the axis R. On the other hand, the gas hose 42, which supplies the shielding gas to the torch 20, and the power cable 43, which supplies the welding power to the torch 20, are routed by a path different from that of the wire cable 41.

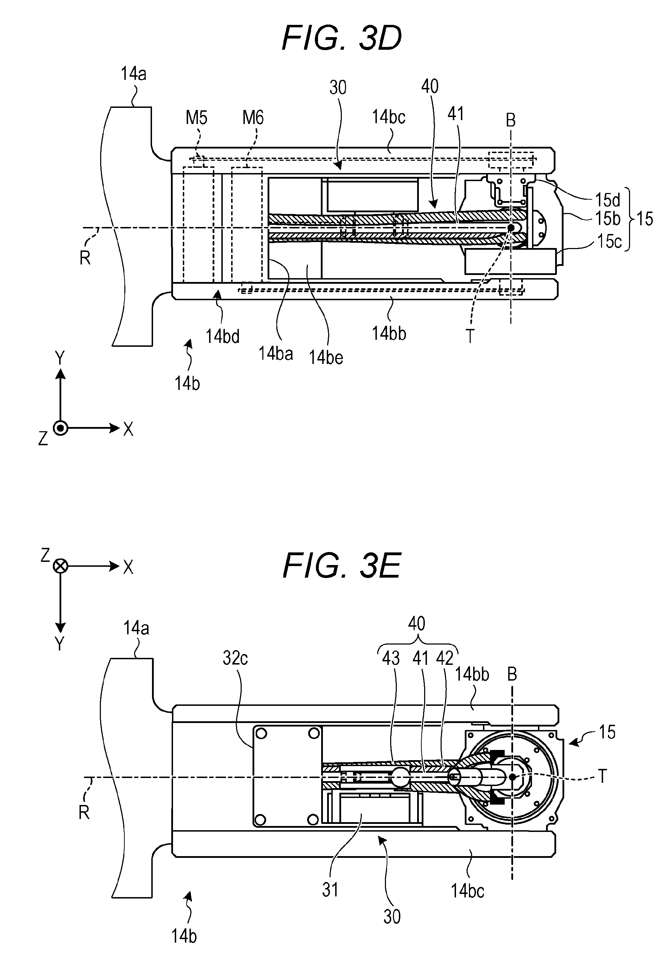

Hereinafter, the wire cable 41, the gas hose 42, and the power cable 43 may be collectively referred to as "cables 40." The specific method for routing the cables 40 will be described later with reference to Figs. 3D to 3F. In this embodiment, the cables 40 all have flexibility. The power cable 43 branches into, for example, two cables as illustrated in Fig. 3A.

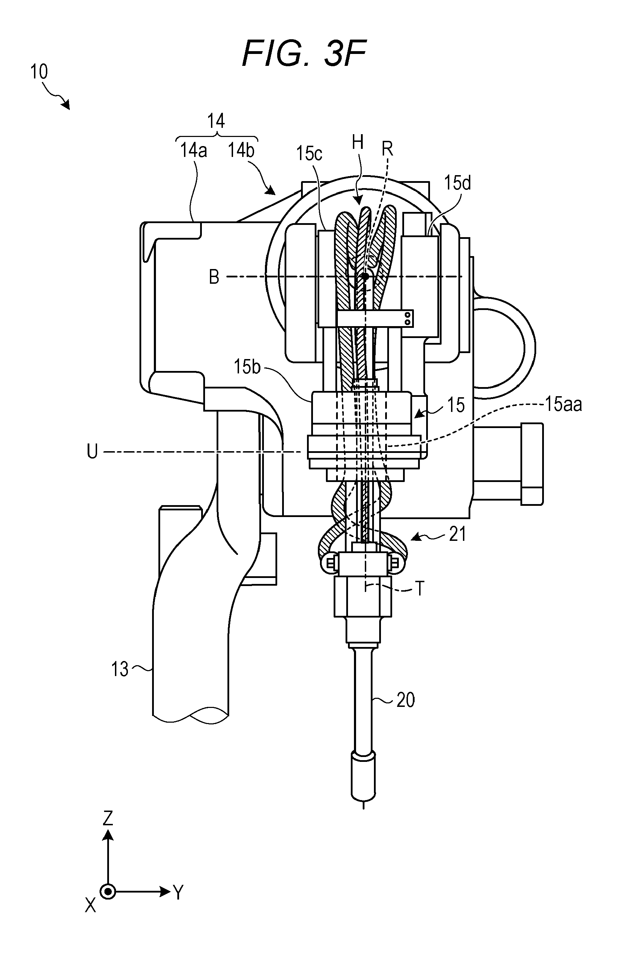

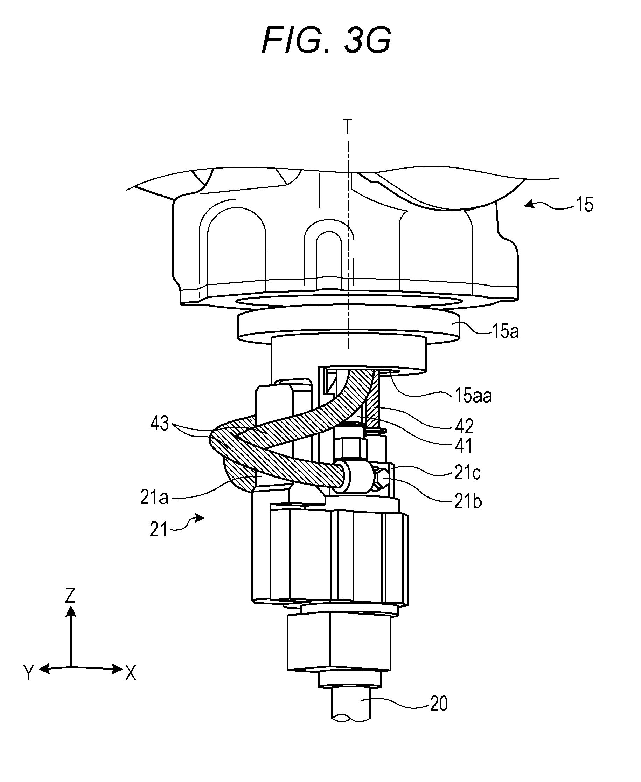

As illustrated in Fig. 3A, while the bending direction of the cables 40 is regulated by a regulation plate 15e illustrated in this drawing, the cables 40 are inserted through a passage hole 15aa, which is provided to penetrate the mounting portion 15, and coupled to the torch 20. Here, the torch 20 is secured to the flange 15a via the torch clamp 21. The detail of the periphery of the torch clamp 21 and the mounting portion 15 will be described later with reference to Figs. 3F and 3G.

Next, the arrangement configuration of the feeding device 30 including a specific configuration of the second arm 14b will be described with reference to Figs. 3B to 3G. Fig. 3B is a schematic perspective diagram illustrating the configuration of the feeding device 30. Fig. 3C is a schematic side diagram illustrating the configuration of the feeding device 30.

Fig. 3D is a schematic plan diagram illustrating the periphery of the upper arm 14. Fig. 3E is a schematic bottom diagram illustrating the periphery of the upper arm 14. Fig. 3F is a schematic front diagram illustrating the periphery of the upper arm 14. Fig. 3G is a schematic perspective diagram illustrating the periphery of the torch clamp 21.

Firstly, a specific configuration of the feeding device 30 will be described with reference to Figs. 3B and 3C. To clear the description, Fig. 3B illustrates the feeding device 30 while a cover 34 is transparently illustrated. As already described in Fig. 3A, the feeding device 30 includes the motor 31 and the feeder 32.

As illustrated in Fig. 3B, the motor 31 has a shaft 31a. A drive roller 33a is disposed at the shaft 31a. In Fig. 3B, the rotation axis of the drive roller 33a (the shaft 31a) is illustrated as an axis r1.

The feeder 32 includes a roller supporting portion 32a, a wire holding portion 32b, a bracket 32c, and an adjuster 32d. As illustrated in Fig. 3C, the motor 31 and the wire holding portion 32b described above are secured to the second arm 14b via the bracket 32c. The detail of this point will be described later with reference to Fig. 3E.

As illustrated in Fig. 3B, the roller supporting portion 32a supports a driven roller 33b rotatably around an axis r2 parallel to the axis r1. The roller supporting portion 32a is mounted to the wire holding portion 32b by a method described later.

The wire holding portion 32b has a pair of cable securing portions 32ba. As illustrated in Fig. 3B, the pair of cable securing portions 32ba is disposed along the axis line direction of an axis R to sandwich the drive roller 33a and the driven roller 33b therebetween and to intersect with the axis line of the axis R. The wire cable 41 is attached to the outside of the respective cable securing portions 32ba via fixtures 41a.

As illustrated in Fig. 3C, the wire cable 41 is provided such the wire Wi is exposed between the cable securing portions 32ba (the fixtures 41a). This exposed portion of the wire Wi is sandwiched by the drive roller 33a and the driven roller 33b along the axis line of the axis R. The wire Wi thus sandwiched is fed to the torch 20 (see Fig. 3A) by rotation of the drive roller 33a and the driven roller 33b.

As just described, in the feeding device 30 according to the embodiment, the drive roller 33a is disposed at the shaft 31a of the motor 31. Accordingly, a mechanism for transmitting the power from the shaft 31a to the drive roller 33a can be eliminated. Accordingly, in the feeding device 30, the feeding device 30 can be compact and the mechanism (structure) can be simplified.

As illustrated in Fig. 3C, the roller supporting portion 32a has the shape extending along the axis line direction of the axis R. In the wire holding portion 32b, one end (fixed end) of the roller supporting portion 32a in the axis line direction of the axis R is swingably provided around an axis r3 illustrated in this drawing (see an arrow 207 in Fig. 3C). The axis r3 is a pivot parallel to the axis line of the support axis r2 of the driven roller 33b. The other end (free end) of the roller supporting portion 32a in the axis line direction of the axis R is, for example, locked at the wire holding portion 32b by the adjuster 32d described later.

Thus, the exposed portion of the wire Wi between the cable securing portions 32ba can be exposed to the outside without detaching the roller supporting portion 32a from the wire holding portion 32b. Accordingly, the complication of maintenance work on the feeding device 30 can be prevented.

The feeding device 30 according to the embodiment allows routing work of the wire Wi between the cable securing portions 32ba from the lower side (in the negative direction of the Z-axis in the drawing) of the second arm 14b. Accordingly, even when the second arm 14b is at a high position, the maintenance work can be easily performed without using scaffolding or the like.

Next, the adjuster 32d will be described with reference to Fig. 3C. As illustrated in Fig. 3C, the adjuster 32d includes a locking member 32da, a biasing member 32db, and an abutting member 32dc. The locking member 32da is, for example, a fastening member such as a bolt. While the locking member 32da is inserted through the roller supporting portion 32a, the locking member 32da is secured to a bolt hole (not illustrated) disposed at the wire holding portion 32b. Fig. 3C illustrates the axis line of the locking member 32da (bolt) as an axis r4.

The biasing member 32db is an elastic body such as a spring and a rubber. The locking member 32da is inserted through the biasing member 32db. The biasing member 32db is sandwiched between the locking member 32da and the abutting member 32dc such that an elastic direction of the biasing member 32db is parallel to the axis r4. The locking member 32da is inserted through the abutting member 32dc. The abutting member 32dc abuts on the roller supporting portion 32a, and is biased toward the roller supporting portion 32a by the biasing member 32db.

That is, the locking member 32da (bolt) is bolted into the bolt hole of the wire holding portion 32b so as to compress the biasing member 32db along the direction of the axis r4. The abutting member 32dc presses the roller supporting portion 32a (the driven roller 33b) toward the drive roller 33a by the repulsion force of the compressed biasing member 32db. Accordingly, the biasing member 32db presses the driven roller 33b toward the drive roller 33a.

Accordingly, the adjuster 32d allows selecting the type of the biasing member 32db and/or adjusting the bolting amount of the locking member 32da so as to easily adjust the sandwiching pressure of the wire Wi. That is, the adjuster 32d allows adjustment of the abutting pressure (sandwiching pressure) of the driven roller 33b to the wire Wi sandwiched between the driven roller 33b and the drive roller 33a. When such adjustment of the sandwiching pressure is unnecessary, the roller supporting portion 32a may be secured to the wire holding portion 32b without disposing the adjuster 32d.

The feeding device 30 may have the cover 34 as illustrated in Figs. 3B and 3C. The cover 34 is an example of a cover member, and has an eave portion 34a. The eave portion 34a covers a part of the outer peripheries of the shaft 31a of the motor 31 and the drive roller 33a. As illustrated in Fig. 3C, the gas hose 42 and the power cable 43 are routed to pass through the upper side (the positive direction of the Z-axis in the drawing) of the eave portion 34a. That is, the power cable 43 is routed in the direction to the mounting portion 15 while being separated from the shaft 31a of the motor 31 and the drive roller 33a by the cover 34 (the eave portion 34a). This prevents the interference between: the gas hose 42 and the power cable 43; and the rotating objects such as the shaft 31a and the drive roller 33a.

In the description with reference to Figs. 3B and 3C, the case where the roller supporting portion 32a is swingably provided at the wire holding portion 32b is described as an example. Instead, the roller supporting portion 32a may be removably disposed at the wire holding portion 32b. That is, the roller supporting portion 32a may be removable together with the driven roller 33b from the side where the driven roller 33b is arranged, which is the side opposite to the side where the drive roller 33a is arranged, in the feeding device 30.

In this case, it is possible to enlarge the work area for the exposed portion of the wire Wi between the cable securing portions 32ba. Accordingly, the maintenance work of the feeding device 30 can be easily performed.

Even in this case, the sandwiching pressure of the wire Wi can be easily adjusted by locking the roller supporting portion 32a with respect to the wire holding portion 32b by the adjuster 32d. The number of the adjuster 32d is not limited to one. For example, a plurality of the adjusters 32d may be disposed at both ends of the roller supporting portion 32a in the axis line direction of the axis R.

Next, the arrangement of the feeding device 30 and the routing path of the cables 40 in the second arm 14b will be described with reference to Figs. 3D and 3E.

As illustrated in Figs. 3D and 3E, the second arm 14b has a bottom portion 14ba (see Fig. 3D), a first extending portion 14bb, and a second extending portion 14bc, and is formed in a forked shape. The first extending portion 14bb extends along the axis line of the axis R from the bottom portion 14ba. The second extending portion 14bc is disposed away from the first extending portion 14bb to be parallel to the first extending portion 14bb. From the lower side (the negative direction side of the Z-axis in the drawing) of the bottom portion 14ba, a projecting portion 14be, which projects out along the axis line of the axis R, is disposed.

The first extending portion 14bb and the second extending portion 14bc support the mounting portion 15 at their tip portions. At the base end side of the second arm 14b with respect to the bottom portion 14ba, a housing chamber 14bd (see Fig. 3D), which houses the servo motors M5 and M6, is formed.

As illustrated in Fig. 3E, the bracket 32c is secured to the bottom surface of the projecting portion 14be (see Fig. 3D) by a fastening member or the like, so that the feeding device 30 is secured to the second arm 14b. Accordingly, the work for securing and removing the feeding device 30 can be easily performed from the lower side (the negative direction side of the Z-axis in the drawing) of the second arm 14b.

The feeding device 30 is arranged at least at a certain interval (predetermined interval) from the swinging axis (axis B) of the mounting portion 15 in the negative direction of the X-axis in the drawing. Accordingly, the distance between: the movable part around the axis B and the movable part around the axis T; and the feeding device 30 can be appropriately set. This prevents the feeding device 30 from being affected by the movable parts.

In other words, this prevents the bending of the wire cable 41 and the buckling of the wire cable 41, which are caused by application of a large compressive force between the wire cable 41 and the feeding device 30 due to the swinging of the mounting portion 15 or the rotation of the flange 15a (see Fig. 3A). Accordingly, the situation that hinders the supply of the wire Wi can be avoided.

As a method for setting the above-described certain interval, for example, there is a method that determines an appropriate value in advance by experiment or the like based on the movement of the robot 10 and/or the flexibility of the cables 40.

At least the feeding device 30 is arranged between the fork of the second arm 14b at a position not so far from the torch 20. Accordingly, for example, compared with the configuration where the feeding device 30 is arranged at the back side (the negative direction side of the X-axis in the drawing) of the base end portion of the upper arm 14, the resistance against the supply of the wire Wi can be reduced.

Accordingly, a device that can feed the wire Wi during welding in the positive direction and the opposite direction can be employed as the feeding device 30. Thus, the interference between the feeding device 30 and the peripheral object can be prevented and the responsiveness of the feeding operation of the wire Wi can be enhanced.

As illustrated in Figs. 3D and 3E, the wire cable 41 is routed along the axis line of the axis R between the fork of the second arm 14b. This allows preventing the unstable state of the wire cable 41 itself by rotation of the second arm 14b around the axis R. That is, the situation that hinders the supply of the wire Wi can be avoided.

A method for routing the cables 40 including the wire cable 41 will be described. As illustrated in Fig. 3D, the cables 40 are inserted through the hollow portion of the first arm 14a, and is routed from the first arm 14a side. Among these cables 40, the wire cable 41 is routed along the axis line of the axis R as described above.

The gas hose 42 and the power cable 43 pass through the upper side (the positive direction side of the Z-axis in the drawing) of the eave portion 34a (see Fig. 3C) of the cover 34 while being gradually curved. Furthermore, the gas hose 42 and the power cable 43 are routed together with the wire cable 41 in the direction to the mounting portion 15.

By routing the cables 40 as just described, the hindrance of the supply of the wire Wi and the disconnection of the cables 40 due to application of a large compressive force to the cables 40 can be prevented.

Especially, in this embodiment, the power cable 43, which tends to be thick and have low flexibility, is separated from the wire cable 41 and is a branched type. This allows dispersing the cable load. Accordingly, even in the case where the cables 40 receives a large compressive force caused by swinging of the mounting portion 15 or similar cause, for example, buckling and disconnection is less likely to occur in the cables 40.

Here, the configuration of the mounting portion 15 will be described. As illustrated in Fig. 3D, the mounting portion 15 includes a bottom portion 15b, a first portion 15c, and a second portion 15d, and is formed in a forked shape, which has an approximately U shape in front view (see Fig. 3F). The first portion 15c is disposed to extend along the axis line of the axis T from the bottom portion 15b. The second portion 15d is disposed parallel to the first portion 15c away from the first portion 15c.

As illustrated in Fig. 3F, the cables 40 including the wire cable 41, which is routed from the bottom portion 14ba (see Fig. 3D) along the axis line of the axis R, are routed between the fork of the mounting portion 15 and inserted through the passage hole 15aa. Furthermore, the cables 40 are coupled to the torch 20 via the torch clamp 21.

In this torch clamp 21, the cables 40 are routed as follows and coupled to the torch 20. That is, as illustrated in Fig. 3G, the torch clamp 21 includes a pillar 21a, a terminal 21b, and a joining portion 21c.

The pillar 21a is a member that has a columnar shape extending from the portion attached to the flange 15a toward the torch 20, and forms a support pillar of the torch clamp 21. The mounting portion 15 and the torch 20 are coupled to each other via the pillar 21a. The terminal 21b is a coupling terminal of the power cable 43, and is disposed at the side end of the joining portion 21c described later.

The joining portion 21c is a member that joins the wire cable 41, the gas hose 42, and the power cable 43 together to be electrically connected to the torch 20. Incidentally, a coupling portion (not illustrated) of the wire cable 41 and the gas hose 42 in the joining portion 21c is provided at the side facing the passage hole 15aa in the joining portion 21c.

As illustrated in Fig. 3G, the wire cable 41 and the gas hose 42 after passing the passage hole 15aa from the mounting portion 15 side are coupled to the joining portion 21c from the Z-axis direction in the drawing via the coupling portion described above. In contrast, the power cable 43 is routed from the passage hole 15aa while bypassing the outer side of the pillar 21a. That is, the power cable 43 is routed to penetrate the mounting portion 15 along the axis T from the second arm 14b side. The power cable 43 is further cross-coupled on the pillar 21a. Specifically, the two power cables 43 are routed to obliquely intersect with each other on the pillar 21a.

Then, the power cable 43 is coupled to the joining portion 21c via the terminal 21b from the direction (see the X-axis direction in the drawing) approximately perpendicular to the axis T. The power cable 43 moves in association with rotation of the flange 15a around the axis T. With the above-described configuration, for example, the shear force that is applied to the terminal 21b from the power cable 43 thus moving can be suppressed.

That is, the above-described configuration can prevent an excessive stress applied to the terminal 21b from the power cable 43, which is thicker than the wire cable 41 and the gas hose 42 and has comparatively low flexibility. This also allows preventing the excessive stress concentration on the power cable 43 itself. Accordingly, the robot 10 is likely to have various welding postures. This also allows combining the loose power cable 43 and preventing the interference between the power cable 43 and the peripheral object.

The advantageous effects provided by the arrangement structure of the feeding device 30 and the method for routing the cables 40 as described above will be collectively described. Firstly, one example of a conventional arrangement structure will be described. Though this example is merely a related art, the same reference numerals are assigned to components with substantially the same functions to those in this embodiment.

According to the related art, the feeding device 30 is disposed in the portion at the proximity of the mounting portion 15 of the second arm 14b to reduce the load on the cables 40. However, in this related art, the feeder 32 of the feeding device 30 is disposed at the outer side of the second arm 14b. Accordingly, the cables 40 are routed to pass the outer side of the second arm 14b.

Thus, according to the related art, the second arm 14b including the feeding device 30 and the wire cable 41 tends to be large-sized. Accordingly, the second arm 14b is likely to interfere with the peripheral object. To prevent such interference, a wide space is provided at the periphery of the robot 10. Also, the beauty of the appearance of the second arm 14b is likely to be ruined.

In this respect, with the arrangement structure of the feeding device 30 according to this embodiment, the feeder 32 and the wire cable 41 in addition to the motor 31 are arranged in the space H (see Fig. 3A) formed between the fork of the second arm 14b. Accordingly, the interference between the robot 10 and the peripheral object can be more effectively reduced and the space provided at the periphery of the robot 10 can be reduced in size to be smaller than before. Further, the beauty of the appearance of the robot 10 can be maintained.

Furthermore, when the robot 10 takes a welding posture, an excessively large movement to avoid the interference with the peripheral object is not necessary. This allows shortening the operating time of the robot 10. That is, the arrangement structure of the feeding device 30 contributes to shortening the working process time.

As illustrated in Fig. 3A, the feeding device 30 is arranged between the fork of the second arm 14b. This allows preventing the interference between the feeding device 30 and the peripheral object. This also allows reducing the attachment of scattered objects generated by sputtering. Accordingly, the breakage, the breakdown, and the like of the feeding device 30 can be reduced.

As illustrated in Fig. 3C, the feeding device 30 is disposed such that the roller supporting portion 32a is swingable in the negative direction of the Z-axis in the drawing together with the driven roller 33b or removable from the feeding device 30. Accordingly, when the robot 10 takes the basic posture, it is possible to perform the maintenance work for the feeding device 30, including the routing work of the wire Wi, from the lower side of the second arm 14b. Furthermore, the adjuster 32d allows simply adjusting the sandwiching force of the wire Wi in the feeding device 30 from the lower side of the second arm 14b.

For example, as illustrated in Fig. 3A and the like, the feeding device 30 is arranged between the fork of the second arm 14b at least at a certain interval in the negative direction of the X-axis in the drawing from the swinging axis (axis B) of the mounting portion 15. Accordingly, the supply of the wire Wi is less likely to be hindered by bending of the wire cable 41. Furthermore, the responsiveness of the feeding speed of the wire Wi is less likely to be ruined.

Accordingly, the arrangement structure of the feeding device 30 can contribute to implementation of the welding operation with high quality by the robot 10. As described above, the device that can feed the wire Wi during welding in the positive direction and the opposite direction can be employed as the feeding device 30. This also contributes to implementation of the welding operation with high quality.

As illustrated in Fig. 3A and the like, the gas hose 42 and the power cable 43 are disposed separately form the wire cable 41. Accordingly, the supply of the wire Wi is less likely to be hindered. Furthermore, the load on the cables 40 in association with the movement of the robot 10 is likely to be dispersed.

This allows reducing the buckling, the disconnection, and the like of the cables 40. That is, the robot 10 is likely to take various welding postures.

The power cable 43 branches into a plurality of cables. For example, as illustrated in Fig. 3G, a plurality of the power cables 43 is cross-coupled in the torch clamp 21 and coupled to the joining portion 21c.

Accordingly, the power cable 43 that tends to be thick and have low flexibility can be easily routed. Furthermore, concentration of the load to the terminal 21b by the power cable 43 allows preventing the breakage of the terminal 21b. That is, the robot 10 is likely to take various welding postures.

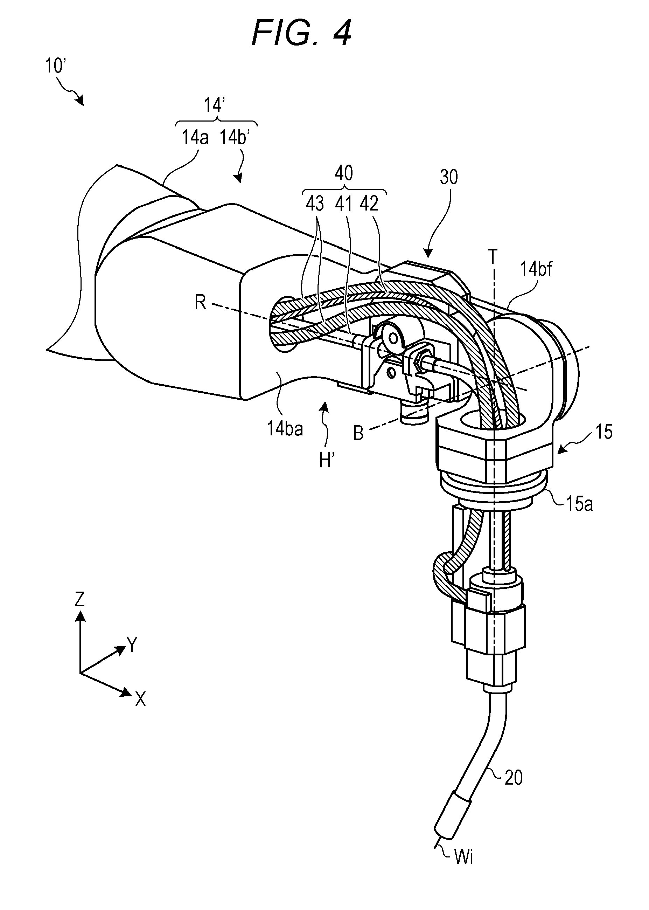

Incidentally, so far, the description has been given of the case where the second arm 14b is formed in a forked shape by the first extending portion 14bb and the second extending portion 14bc as an example. However, the shape of the second arm 14b is not limited to the shape of this example. In the following, a modification of the upper arm 14 including the second arm 14b will be described with reference to Fig. 4.

This modification is the modification of the upper arm 14, for example, illustrated in Fig. 3A. The same reference numerals are assigned to substantially the same elements to those of the upper arm 14 illustrated in Fig. 3A and the like, and therefore the description thereof will be omitted. Fig. 4 is a schematic perspective diagram illustrating the periphery of an upper arm 14' according to the modification.

As illustrated in Fig. 4, in the upper arm 14' of a robot 10' according to the modification, a second arm 14b' has a third extending portion 14bf. The third extending portion 14bf is disposed to extend along the axis line of the axis R from the bottom portion 14ba. This third extending portion 14bf supports the mounting portion 15 rotatably around the axis B in a cantilevered state near the tip portion.

Accordingly, a space H' is formed between the tip portion and the base end portion of the second arm 14b' such that the space H' faces the inner walls of the bottom portion 14ba and the third extending portion 14bf and is along the axis line of the axis R. The feeding device 30 is arranged on the inner wall of the third extending portion 14bf in the space H'.

In such a manner, in the upper arm 14' according to the modification, the second arm 14b' supports the mounting portion 15 in a cantilevered state. The feeding device 30 is arranged in the space H' formed between the tip portion and the base end portion of the second arm 14b' so as to intersect with the axis line of the axis R. The feeding device 30 feeds the wire Wi along this axis line of the axis R.

This allows the wire Wi to pass the inner wall side of the second arm 14b' facing the space H'. Accordingly, the outer shape of the second arm 14b' can be compact. Accordingly, the interference between: the robot 10' and the feeding device 30; and the peripheral objects can be more effectively prevented, and the space provided at the periphery of the robot 10' can be reduced in size.

The feeding device 30 and the cables 40 are opened in many areas. This allows enlarging the work area for the maintenance work. Accordingly, the maintainability for the feeding device 30 and the periphery of the cables 40 can be enhanced.

As described above, a robot according to the embodiment includes a mounting portion, an arm portion, an arm supporting portion, a space, and a feeding device. The mounting portion is configured such that a welding torch is attachable thereto. The arm portion has a tip portion that swingably supports the mounting portion.

The arm supporting portion has a tip portion that supports the arm portion rotatably around the rotation axis perpendicular to the swinging axis of the mounting portion. The space is formed between the tip portion and the base end portion of the arm portion to be provided along the axis line of the rotation axis.

The feeding device is arranged in the space to intersect with the axis line of the rotation axis. The feeding device feeds a wire to the welding torch mounted on the mounting portion. The feeding device includes a feeding mechanism (feeder) and a motor. The feeding mechanism feeds a wire along the axis line of the rotation axis. The motor is arranged between: the inner wall of the arm portion facing the space; and the feeding mechanism, and drives the feeding mechanism.

Accordingly, in the robot according to the embodiment, the interference between the robot and the peripheral object can be more effectively prevented and the space provided at the periphery of the robot can be reduced in size.

In the embodiment as described above, the description is given of the case where the robot is used for arc welding as an example. However, this embodiment does not limit the type of work performed by the robot. For example, a hand that can hold a workpiece may be mounted as an end effector instead of the welding torch. In this case, the robot may perform, for example, assembly work of a workpiece while supplying a wire-shaped member to this hand using the feeding device.

Also, the shape of the arm portion of the robot is not limited to the shape illustrated in the embodiment. For example, the shape of the second arm 14b according to the above-described embodiment is not limited to the forked shape or the cantilevered shape illustrated as the modification, and may be any shape that can swingably support the mounting portion 15.

In the above-described embodiment, the description is given of the case where the feeding device is arranged such that the roller supporting portion 32a is oriented to the negative direction (see Fig. 3A) of the Z-axis, as an example. However, the feeding device may be disposed such that the roller supporting portion 32a is oriented to any radial direction centered at the axis line of the axis R (see Fig. 3A). In this case, in the wall portion of the second arm 14b facing the roller supporting portion 32a (for example, the first extending portion 14bb, the second extending portion 14bc, and/or the third extending portion 14bf), an opening portion or a cutout portion that allows access to the roller supporting portion 32a may be disposed as necessary.

In the above-described embodiment, a multi-axis robot with six axes is described as an example. However, the number of axes of the robot is not limited. The robot may be, for example, a 7-axis robot. Further, the arrangement of the servo motors M1 to M6 is not limited to the arrangement described in the embodiment.

In the above-described embodiment, a single arm robot is described as an example. However, the number of arms of the above-described robot may be plural. For example, the above-described embodiment may be applied to at least any arm of a multi-arm robot that has a plurality of arms.

In the above-described embodiment, the description is given of the case where the feeder feeds the wire sandwiched by a set of rollers as an example. However, the number of rollers that sandwich the wire is not limited to two. The number of the rollers that sandwiches the wire may be three or more. In this case, the number of each of the drive roller and the driven roller is determined to be any number of one or more as appropriate. The diameters of the drive roller and the driven roller may be different from each other.

In the above-described embodiment, the description is given of the case where the drive roller is disposed at the shaft of the motor as the example. However, these shaft and drive roller may be disposed separately from each other. In this case, the driving force of the shaft may be transmitted to the drive roller by a power transmission mechanism of a belt or a gear.

In the above-described embodiment, a bracket is secured to the bottom surface of the projecting portion. The position where the bracket is secured may be, for example, any position such as the inner wall of the second arm or the bottom portion 14ba. The motor and the wire holding portion may be directly attached to the second arm without using the bracket.

In the above-described embodiment, the description is given of the case where a gas hose and a power cable are disposed separately from the wire cable as an example. This should not be construed in a limited sense, and it is only necessary that at least the power cable is separate from the other cables. For example, the wire cable and the gas hose may be integrated while the power cable is separate from these cables.

In the above-described embodiment, the description is given of the case where the power cable branches into two cables as an example. However, the number of branches of the power cable is not limited. Accordingly, the power cable may branch into three or more cables. Also, at least one set of a plurality of power cables may be cross-coupled on a torch clamp (pillar).

In the above-described embodiment, the description is given of the case where the power cables are cross-coupled and coupled to the terminal from the X-axis direction (see Fig. 3G) as an example. However, the power cable may not necessarily be cross-coupled. For example, instead of being cross-coupled, the power cable may be loosened and bypassed to be coupled to the terminal from the X-axis direction. The power cable may be coupled to the terminal from the direction that is not approximately parallel to the axis T other than the X-axis direction.

In the above-described embodiment, the workpiece is installed on the positioner. Instead of the positioner, a placing table on which a workpiece is placed may be used if the position and/or the posture of the workpiece need not be changed. Further, the welding power supply and the control device are separate from each other in the above description. However, the welding power supply and the control device may be integrated together. In the above-described embodiment, the motor of the feeding device is controlled by the welding power supply. However, this motor may be controlled by the control device.

In the above-described embodiment, the description is given of the case where welding work is performed on one workpiece by welding equipment of one robot as an example. This should not be construed in a limited sense, and welding work may be performed on one workpiece by a plurality of robots having welding equipment. In this case, the welding power supply and/or the control device may be shared by a part or all of the plurality of robots.

Additional advantages and modifications will readily occur to those skilled in the art. Therefore, the disclosure in its broader aspects is not limited to the specific details and representative embodiments shown and described herein. Accordingly, various modifications may be made without departing from the spirit or scope of the general inventive concept as defined by the appended claims and their equivalents.

The robot and the robotic system according to the embodiment may be the following first to fifteenth robots and first robotic system.

A first robot includes: a mounting portion on which a welding torch is mountable; an arm portion having a tip portion that swingably supports the mounting portion; an arm supporting portion having a tip portion that supports the arm portion rotatably around a rotation axis perpendicular to a swinging axis of the mounting portion; and a space formed between the tip portion and a base end portion of the arm portion along an axis line of the rotation axis; and a feeding device arranged in the space to intersect with the axis line of the rotation axis. The feeding device is configured to feed a wire to the welding torch mounted on the mounting portion. The feeding device includes: a feeding mechanism configured to feed the wire along the axis line of the rotation axis; and a motor arranged between: an inner wall of the arm portion facing the space; and the feeding mechanism. The motor is configured to drive the feeding mechanism.

In a second robot according to the first robot, the motor is arranged such that an axis line of an output shaft of the motor has a skew positional relationship with the axis line of the rotation axis.

In a third robot according to the second robot, the motor is arranged to fit into a space between the inner wall of the arm portion and the axis line of the rotation axis in a view from a direction perpendicular to both the axis line of the output shaft of the motor and the axis line of the rotation axis.

In a fourth robot according to the second or third robot, the feeding mechanism includes: a drive roller disposed at the output shaft of the motor; and a driven roller configured to sandwich the wire together with the drive roller such that an axis line of the wire is along the axis line of the rotation axis.

In a fifth robot according to the fourth robot, the feeding device is disposed in the space at a predetermined interval from the swinging axis of the mounting portion toward the arm supporting portion side.

In a sixth robot according to the fourth or fifth robot, the feeding mechanism has a roller supporting portion that rotatably supports the driven roller, and the roller supporting portion is disposed together with the driven roller removably from a side where the driven roller is arranged at a side opposite to a side where the drive roller is arranged.

In a seventh robot according to the fourth or fifth robot, the feeding mechanism is formed to have a shape along an axis line direction of the rotation axis and has a roller supporting portion that rotatably supports the driven roller. The roller supporting portion is disposed to have one end in the axis line direction of the rotation axis as a fixed end and another end as a free end. The fixed end is secured swingably with respect to the feeding device via a pivot parallel to an axis line of a support axis of the driven roller. The free end is locked with respect to the feeding device via a locking portion.

In an eighth robot according to the sixth or seventh robot, the roller supporting portion further includes: a biasing member that presses the driven roller toward the drive roller; and an adjusting member configured to adjust an abutting pressure of the driven roller to the wire sandwiched between the driven roller and the drive roller.

A ninth robot according to any one of the fourth to eighth robots further includes a power cable as a power feeding path to the welding torch. The power cable is disposed separately from a feeding path of the wire. The power cable branches into a plurality of cables.

In a tenth robot according to the ninth robot, the feeding device further includes a cover member that covers a part of outer peripheries of the output shaft of the motor and the drive roller. The power cable is routed in a direction to the mounting portion by being guided while being separated from the output shaft of the motor and the drive roller by the cover member.

An eleventh robot according to the ninth or tenth robot further includes a torch clamp that has: a portion mounted on the mounting portion; and a pillar in a columnar shape extending from the portion toward the welding torch, and that couples the mounting portion and the welding torch together via the pillar. At least one set of the plurality of the power cables is routed to be cross-coupled on the pillar.

A twelfth robot according to the eleventh robot further includes a wire cable as a feeding path of the wire. The wire cable is routed along the axis line of the rotation axis in the space.

In a thirteenth robot according to the twelfth robot, the mounting portion supports the torch clamp rotatably around a second rotation axis perpendicular to the swinging axis. The torch clamp further includes a joining portion that joins the power cable and the wire cable together. The power cable is routed to penetrate the mounting portion from the arm portion side along the second rotation axis, and is coupled to the joining portion from a direction approximately perpendicular to the second rotation axis.

A fourteenth robot according to the thirteenth robot further includes a gas hose as a gas supplying path to the welding torch. The power cable, the wire cable, and the gas hose are disposed separately form one another.

A fifteenth robot according to any one of the first to fourteenth robots further includes the welding torch.

A first robotic system performs welding work by the fifteenth robot.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A robot (10, 10'), **characterized by**:
a mounting portion (15) on which a welding torch (20) is mountable;
an arm portion (14b, 14b') having a tip portion, the arm portion (14b, 14b') swingably supporting the mounting portion (15) at the tip portion;
an arm supporting portion (14a) having a tip portion, the arm supporting portion (14a) supporting the arm portion (14b, 14b') rotatably around a first rotation axis (R) at the tip portion, the first rotation axis (R) being perpendicular to a swinging axis (B) of the mounting portion (15); and
a feeding device (30) arranged in a space (H, H') to intersect with an axis line of the first rotation axis (R), the space (H, H') being formed between the tip portion and a base end portion of the arm portion (14b, 14b') along an axis line of the first rotation axis (R), the feeding device (30) being configured to feed a wire (Wi) to the welding torch (20) mounted on the mounting portion (15), wherein
the feeding device (30) includes:
a feeding mechanism (32) configured to feed the wire (Wi) along the axis line of the first rotation axis (R); and
a motor (31) arranged between an inner wall of the arm portion (14b, 14b') facing the space (H, H') and the feeding mechanism (32), the motor (31) being configured to drive the feeding mechanism (32).

2. The robot according to claim 1, wherein
the motor (31) is arranged such that an axis line of an output shaft (31a) of the motor (31) has a skew positional relationship with the axis line of the first rotation axis (R).

3. The robot (10, 10') according to claim 2, wherein
the motor (31) is arranged to fit into a space between the inner wall of the arm portion (14b, 14b') and the axis line of the first rotation axis (R) in a view from a direction perpendicular to both the axis line of the output shaft (31a) of the motor (31) and the axis line of the first rotation axis (R).

4. The robot (10, 10') according to claim 2 or 3, wherein
the feeding mechanism (32) includes:
a drive roller (33a) disposed at the output shaft (31a) of the motor (31); and
a driven roller (33b) configured to sandwich the wire (Wi) together with the drive roller (33a) such that an axis line of the wire (Wi) is provided along the axis line of the first rotation axis (R).

5. The robot (10, 10') according to claim 4, wherein
the feeding device (30) is disposed in the space (H, H') at a predetermined interval from the swinging axis (B) of the mounting portion (15) toward the arm supporting portion (14a).

6. The robot (10, 10') according to claim 4 or 5, wherein
the feeding mechanism (32) has a roller supporting portion (32a) that rotatably supports the driven roller (33b), and
the roller supporting portion (32a) is provided together with the driven roller (33b) to be removably from a side where the driven roller (33b) is arranged, which is a side opposite to a side where the drive roller (33a) is arranged.

7. The robot (10, 10') according to claim 4 or 5, wherein
the feeding mechanism (32) has a shape along an axis line direction of the first rotation axis (R) and has a roller supporting portion (32a) that rotatably supports the driven roller (33b),
one end of the roller supporting portion (32a) in the axis line direction of the first rotation axis (R) is a fixed end, and another end of the roller supporting portion (32a) is a free end,
the fixed end is secured swingably with respect to the feeding device (30) via a pivot (r3) parallel to an axis line of a support axis (r2) of the driven roller (33b), and
the free end is locked with respect to the feeding device (30) via a locking portion (32da).

8. The robot (10, 10') according to claim 6 or 7, wherein
the roller supporting portion (32a) further includes:
a biasing member (32db) that presses the driven roller (33b) toward the drive roller (33a); and
an adjusting member (32d) configured to adjust an abutting pressure of the driven roller (33b) to the wire (Wi) sandwiched between the driven roller (33b) and the drive roller (33a).

9. The robot (10, 10') according to any one of claims 4 to 8, further comprising
a power cable (43) as a power feeding path to the welding torch (20), the power cable (43) being provided separately from a feeding path of the wire (Wi), wherein
the power cable (43) branches into a plurality of cables.

10. The robot (10, 10') according to claim 9, wherein
the feeding device (30) further includes a cover member (34) that covers a part of outer peripheries of the output shaft (31a) of the motor (31) and the drive roller (33a), and
the power cable (43) is routed in a direction to the mounting portion (15) while being separated from the output shaft (31a) of the motor (31) and the drive roller (33a) by the cover member (34).

11. The robot (10, 10') according to claim 9 or 10, further comprising
a torch clamp (21) that includes a portion mounted on the mounting portion (15), and a pillar (21a) having a columnar shape extending from the portion toward the welding torch (20), wherein
the mounting portion (15) and the welding torch (20) are coupled together via the pillar (21a), and
at least one set of a plurality of the power cables (43) is routed to be cross-coupled on the pillar (21a).

12. The robot (10, 10') according to claim 11, further comprising
a wire cable (41) as a feeding path of the wire (Wi), the wire cable (41) being routed along the axis line of the first rotation axis (R) in the space (H, H').

13. The robot (10, 10') according to claim 12, wherein
the mounting portion (15) supports the torch clamp (21) rotatably around a second rotation axis (T) perpendicular to the swinging axis (B),
the torch clamp (21) further includes a joining portion (21c) that joins the power cable (43) and the wire cable (41) together, and
the power cable (43) is routed to penetrate the mounting portion (15) from a side of the arm portion (14b, 14b') along the second rotation axis (T), and is coupled to the joining portion (21c) from a direction approximately perpendicular to the second rotation axis (T).

14. The robot (10, 10') according to claim 13, further comprising
a gas hose (42) as a gas supplying path to the welding torch (20), wherein
the power cable (43), the wire cable (41), and the gas hose (42) are provided separately form one another.

15. A robotic system (1), **characterized by**
the robot (10, 10') according to any one of claims 1 to 14, the robot further including the welding torch (20).
